# EUROPEAN PATENT SPECIFICATION

(11) **EP 1 863 971 B1**
(45) Date of publication and mention of the grant of the patent: **24.02.2016**
(21) Application number: 06727698.0
(22) Date of filing: 21.03.2006
(51) Int. Cl.: D06F 58/26, D06F 58/28, D06F 25/00

(54) **A CONTROL METHOD FOR A WASHER/DRYER**
STEUERUNGSVERFAHREN FÜR WASCHMASCHINE/TROCKNER
PROCEDE DE COMMANDE POUR MACHINE A LAVER/SECHE-LINGE

(30) Priority: 22.03.2005 TR 200501045
(43) Date of publication of application: 12.12.2007
(73) Proprietor: Arçelik Anonim Sirketi, 34950 Istanbul (TR)
(72) Inventor: TATAR, Hakan Arçelik Anonim Sirketi, 34950 Istanbul (TR); YILMAZ, Namik Arçelik Anonim Sirketi, 34950 Istanbul (TR); AKDOGANBULUT, Savas Arçelik Anonim Sirketi, 34950 Istanbul (TR); CELEP, Burak Arçelik Anonim Sirketi, 34950 Istanbul (TR); DOGAN, Omer Siteler Mah., Denizli (TR)
(86) International application number: PCT/IB2006/050869
(87) International publication number: WO 2006/100643

(56) References cited:
- WO-A-01/57457
- WO-A-2005/010270
- DE-A1- 19 828 242
- GB-A- 2 217 824
- US-A- 5 321 897
- US-B1- 6 401 357

## Description

The present invention relates to a washer/dryer and a control method thereof wherein the laundry is dried effectively without being damaged.

In washer/dryers the laundry is dried by utilizing various heaters. One of the most efficient methods utilized for removing the moisture in the laundry is performing the drying process by using microwave energy. The microwave energy generated via a magnetron, radiating energy with a suitable wave length provides for removing the moisture without heating the laundry.

The most important problem encountered in applications using the microwave energy as the heat source is the formation of an arc damaging the laundry when drying laundry with metal accessories like zippers, buttons etc., as the microwave energy interacts with the metal accessories. In the current state-of-the-art, there are various applications devised in order to overcome this adversity and to carry out an effective drying process.

Another problem encountered in drying applications utilizing microwave energy as the heat source, is turning off the microwave energy when the drum stops in order to prevent the laundry from being damaged. In this case, the drying process is prolonged. In the case when the microwave energy is not turned off, utilizing constant and high powered microwave energy when the drum stops, the region around the metal accessories turn yellow due to overheating or burn completely damaging the cloth.

In the state-of-the-art British Patent Application no. GB2217824, a dryer is described wherein microwave irradiation means are used for the drying process. In this embodiment, the intensity of the microwave irradiation in the drum is changed in proportion to the amount of moisture contained within the clothes. As the amount of moisture in the clothes decreases, the level of microwave irradiation is also decreased.

In the state of the art British Patent Application no. GB2375811, the power of the magnetron can be decreased incrementally by monitoring the temperature and pressure within the dryer.

In the state-of-the-art United States Patent no. US5321897, the energy output from the magnetrons is cut when the drum stops rotating, preventing the generation of microwave energy.

In particular, this document discloses a control method for a dryer comprising a drum rotating around an axis into which the laundry is placed and a microwave energy source, the method comprising controlling the rotation of the drum and actuating the microwave energy source with the power to be applied according to the moisture content of the laundry.

In the state-of-the-art United States Patent no. US5555641, a description is given of a dryer wherein the microwave energy source and the auxiliary heaters are switched on and off according to the temperature variations inside the drum.

The state-of-the-art Turkish Patent Application no. TR200301241 describes a washer/dryer (1), comprising a microwave energy source, wherein the moisture content of the laundry in the drying cycle is detected by utilizing a gas sensor, a temperature sensor and a moisture sensor, whereby the possible conditions of burning or melting of the laundry are detected ahead of time.

The object of the present invention is to design a washer/dryer comprising a microwave energy source, wherein the clothes having metal accessories are dried effectively without being yellowed or burnt.

The washer/dryer designed to fulfill the objectives of the present invention is subject-matter of the appended claims and illustrated in the attached figures, where :
Figure 1 - is perspective view of a washer/dryer.
Figure 2 - is the graph showing the change in the power of the microwave energy source, motion of the drum and the moisture content of the laundry in time.

Elements shown in the figures are numbered as follows:
1. Washer/dryer
2. Drum
3. Microwave energy source
4. Heater

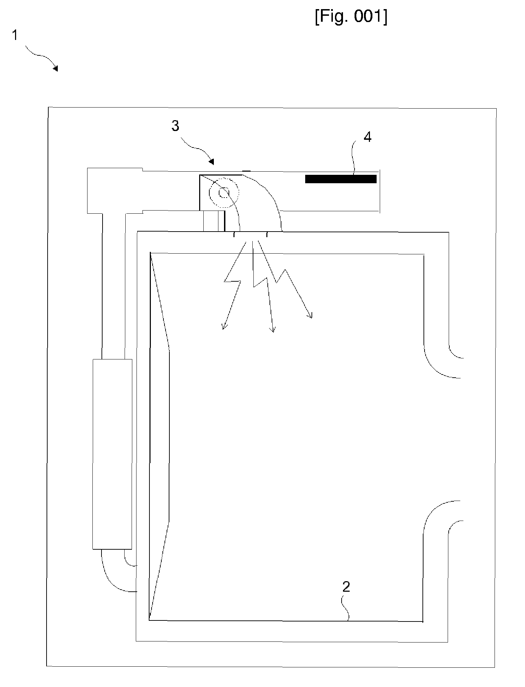

The washer/dryer (1) comprises a drum (2) into which the laundry is placed and rotating around an axis, a microwave energy source (3) utilized as a heat source, generating microwave energy and radiating it inside the drum (2), which is actuated at a lower power level, when the drum (2) is motionless and the metal accessories on the clothes are overheated, than when the drum (2) is rotating, so that the laundry, especially the laundry with metal accessories, can be dried utilizing a microwave energy source (3) without being damaged (Figure 1).

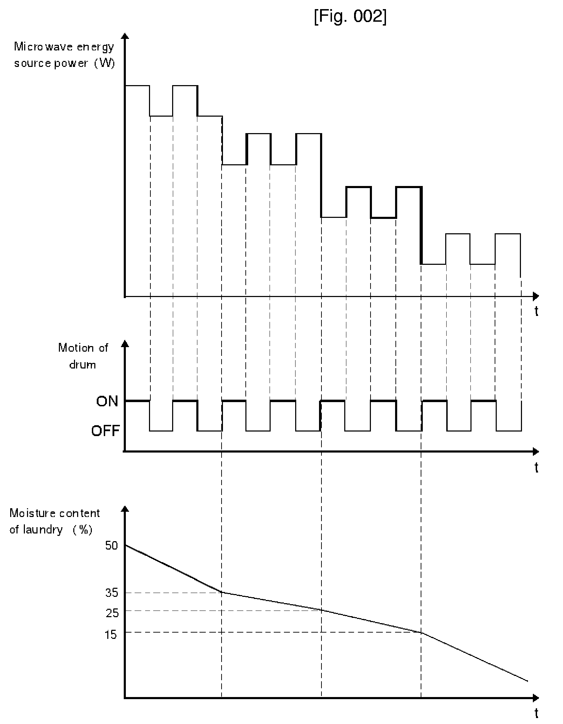

In the preferred embodiment of the present invention, the power (Pdrum_motionless) applied by the microwave energy source (3) when the drum is motionless and the power (Pdrum_rotating) applied by the microwave energy source (3) when the drum is rotating is changed according to the change in the moisture content inside the laundry during the drying process (Figure 2).

In this embodiment of the present invention, the microwave energy source (3) is controlled by the method explained below :

At the start of the drying process, the power values (Pdrum_motionless) to be applied by the microwave energy source (3) when the drum (2) is motionless and the power values (Pdrum_rotating) to be applied by the microwave energy source (3) when the drum (2) is rotating are assigned, as determined by the producer, according to the moisture content of the laundry. Simultaneously the motion of the drum (2) is controlled, if the drum (2) is rotating, the microwave energy source (3) is being actuated with the power (Pdrum_rotating) to be applied when the drum (2) is rotating, according to the moisture content of the laundry. If the drum (2) is motionless, the microwave energy source (3) is actuated with the power (Pdrum_motionless) to be applied when the drum (2) is motionless, which is less than the power (Pdrum_rotating) to be applied when the drum (2) is rotating, according to the moisture content of the laundry. As the drying process goes on, the moisture content of the laundry decreases and relatively the power (Pdrum_motionless) to be applied when the drum is motionless, and the power (Pdrum_rotating) to be applied when the drum (2) is rotating, by the microwave energy source (3) decreases incrementally as compared to the previous power levels (Pdrum_motionless, Pdrum_rotating).

At different moisture content levels, the difference between the power to be applied by the microwave energy source (3) when the drum (2) is motionless and when the drum is rotating (Pdrum_motionless and Pdrum_rotating) is preferably constant.

The table for drying values of, for example, 5 kg. of cotton laundry is given below :

| Moisture content of laundry (%) | Microwave Energy Source Power (W) | |
|---|---|---|
| | (Pdrum_rotating) | (Pdrum_motionless) |
| 50 - 35 | 1700 | 1200 |
| 35 - 25 | 1400 | 900 |
| 25 - 15 | 1100 | 600 |
| 15 - 0 | 800 | 300 |

In another embodiment of the present invention, the washer/dryer (1) comprises one or more heaters (4) that are utilized in addition to the microwave energy source (4).

In this embodiment, the heater (4) is turned on or off during certain periods of time, in accordance with certain moisture values, providing effective drying and conservation of energy at the same time.

With the washer/dryer (1) of the present invention, the damage incurred to the laundry, especially to those with metal accessories, by yellowing, burning as a result of metal heating during the drying process, is reduced to a minimum level and a most efficient drying of the laundry with metal accessories is accomplished avoiding damages.

## Claims

1. A control method for a washer/dryer (1) comprising a drum (2) rotating around an axis into which the laundry is placed and a microwave energy source (3), the control method comprising following steps :
• assigning the power values determined by the producer to be applied, when the drum (2) is motionless and when the drum (2) is rotating Pdrum_motionless and Pdrum_rotating by the microwave energy source (3) according to the moisture content of the laundry,
• controlling the rotation of the drum (2),
• if the drum (2) is rotating, then actuating the microwave energy source (3) with the power Pdrum_rotating to be applied when the drum (2) is rotating, according to the moisture content of the laundry,
• if the drum (2) is motionless, then actuating the microwave energy source (3) with the power Pdrum_motionless to be applied when the drum (2) is motionless according to the moisture content of the laundry, which is lower than power value (Pdrum_rotating) to be applied when the drum (2) is rotating.

2. A control method for a washer/dryer (1) as in Claim 1, **characterized by** a microwave energy source (3), wherein the power Pdrum_motionless applied when the drum is motionless and the power Pdrum_rotating applied when the drum is rotating is changed according to the change in the moisture content of the laundry during the drying process.

3. A control method for a washer/dryer (1) as in Claim 1 or 2, **characterized by** a microwave energy source (3), wherein the difference between the power Pdrum_motionless to be applied when the drum is motionless and the power Pdrum_rotating to be applied when the drum is rotating at different moisture content levels, is constant.

## Patentansprüche

1. Steuerverfahren für eine Wasch-/Trockenmaschine (1), umfassend eine Trommel (2), die sich um eine Achse dreht und in die Wäsche gegeben wird, und eine Mikrowellenenergiequelle (3), wobei das Steuerverfahren folgende Schritte umfasst:
• Zuweisen der vom Hersteller bestimmten anzuwendenden Leistungswerte, wenn die Trommel (2) bewegungslos ist und wenn die Trommel (2) sich dreht, Pdrum_motionless und Pdrum_rotating, durch die Mikroenergiequelle (3) entsprechend dem Feuchtigkeitsgehalt der Wäsche,
• Steuern der Drehung der Trommel (2),
• wenn sich die Trommel (2) dreht, Betätigen der Mikrowellenenergiequelle (3) unter Anwendung von Pdrum_rotating, wenn sich die Trommel (2) dreht, entsprechend dem Feuchtigkeitsgehalt der Wäsche,
• wenn die Trommel (2) bewegungslos ist, Betätigen der Mikrowellenenergiequelle (3) unter Anwendung von Pdrum_motionless, wenn die Trommel (2) bewegungslos ist, wobei der Wert niedriger als der Leistungswert (Pdrum_rotating) ist, der angewandt wird, wenn sich die Trommel (2) dreht,

2. Steuerverfahren für eine Wasch-/Trockenmaschine (1) nach Anspruch 1, **dadurch gekennzeichnet, dass** bei einer Mikrowellenenergiequelle (3) die Leistung Pdrum_motionless angelegt wird, wenn die Trommel bewegungslos ist, und die Leistung Pdrum_rotating angelegt wird, wenn die Trommel sich dreht, gemäß der Veränderung des Feuchtigkeitsgehalts der Wäsche während des Trocknungsvorgangs.

3. Steuerverfahren für eine Wasch-/Trockenmaschine (1) nach Anspruch 1 oder 2, **dadurch gekennzeichnet, dass** bei einer Mikrowellenenergiequelle (3) die Differenz zwischen der Leistung Pdrum_motionless angelegt wird, wenn die Trommel bewegungslos ist, und die Leistung Pdrum_rotating angelegt wird, wenn die Trommel sich bei unterschiedlichen Feuchtigkeitspegeln dreht, konstant ist.

## Revendications

1. Procédé de commande pour un lave-linge/sèche-linge (1) comprenant un tambour (2) tournant autour d'un axe, dans lequel le linge est placé, et une source d'énergie micro-ondes (3), le procédé de commande comprenant les étapes suivantes :
• attribuer les valeurs de puissance Pdrum_motionless et Pdrum_rotating déterminées par le fabricant à être appliquées, lorsque le tambour (2) est immobile et lorsque le tambour (2) est en rotation par la source d'énergie micro-ondes (3) selon la teneur en humidité du linge,
• contrôler la rotation du tambour (2),
• si le tambour (2) est en rotation, donc actionner la source d'énergie micro-ondes (3) avec la puissance Pdrum_rotating à être appliquer lorsque le tambour (2) est en rotation, selon la teneur en humidité du linge,
• si le tambour (2) est immobile, donc actionner la source d'énergie micro-ondes (3) avec la puissance Pdrum_motionless à être appliquer lorsque le tambour (2) est immobile, selon la teneur en humidité du linge, qui est inférieure à la valeur de puissance (Pdrum_rotating) à être appliquer lorsque le tambour (2) est en rotation.

2. Un procédé de commande pour un lave-linge/sèche-linge (1) selon la Revendication 1, **caractérisé par** une source d'énergie micro-ondes (3), où la puissance Pdrum_motionless, qui est appliquée lorsque le tambour est immobile, et la puissance Pdrum_rotating, qui est appliquée lorsque le tambour est en rotation, sont modifiées selon le changement de la teneur en humidité du linge pendant le processus de séchage.

3. Un procédé de commande pour un lave-linge/sèche-linge (1) selon la Revendication 1 ou 2, **caractérisé par** une source d'énergie micro-ondes (3), où la différence entre la puissance Pdrum_motionless, qui est appliquée lorsque le tambour est immobile, et la puissance Pdrum_rotating, qui est appliquée lorsque le tambour est en rotation, à différents niveaux de teneur en humidité, est constante.
